Europäisches Patentamt

European Patent Office

Office européen des brevets

(11) Numéro de publication: **0 272 950 B1**

(12) **FASCICULE DE BREVET EUROPEEN**

(45) Date de publication de fascicule du brevet: **20.05.92**   (51) Int. Cl.⁵: **A01K 1/015**, C02F 11/00

(21) Numéro de dépôt: **87402533.1**

(22) Date de dépôt: **10.11.87**

(54) **Procédé de préparation, à partir de boues de papeterie, d'un produit en particules, absorbant bien les liquides.**

(30) Priorité: **17.11.86 FR 8615932**

(43) Date de publication de la demande:
**29.06.88 Bulletin 88/26**

(45) Mention de la délivrance du brevet:
**20.05.92 Bulletin 92/21**

(84) Etats contractants désignés:
**BE CH DE GB IT LI NL**

(56) Documents cités:
**EP-A- 0 039 522**
**EP-A- 0 169 946**
**US-A- 4 203 388**
**US-A- 4 305 345**

(73) Titulaire: **SIBILLE S.A.**

**F-38780 PONT EVEOUE(FR)**

(72) Inventeur: **Tharrault, François**
**7, rue Achille Garnon**
**F-92330 Sceaux(FR)**

(74) Mandataire: **Marquer, Francis et al**
**Cabinet Moutard 35, Avenue Victor Hugo**
**F-78960 Voisins le Bretonneux(FR)**

## Description

L'invention a pour objet un procédé pour la préparation de particules ayant une bonne capacité d'absorption des liquides et utilisables par exemple comme litière pour des animaux, à partir de boues de papeterie qui sont un sous-produit gênant de la fabrication du papier.

Actuellement, la plus grande partie de l'industrie papetière se débarrasse des boues de papeterie de manière coûteuse en les déshydratant partiellement et en les transportant jusqu'à des lieux de décharge de résidus divers. La déshydratation partielle est exécutée en vue de réduire le coût du transport qui est toujours élevé ; elle est faite jusqu'à une siccité de 30 à 60 % environ (équivalant à 30 à 60 g de matière sèche et 70 à 40 g d'eau pour 100 g de boue) à l'aide de moyens mécaniques (presse à vis, centrifugeuse, filtre à bande presseuse, ...). La matière sèche, qui représente 30 à 60 % des boues rejetées, après déshydratation partielle, est elle-même composée de fibres de cellulose de longueur moyenne (20 à 60 % en poids de la matière sèche) et de charges diverses telles que le kaolin, le talc, la craie, ... (80 à 40 % en poids de la matière sèche).

Il a déjà été proposé de trouver un débouché commercial aux bornes de papeterie en les transformant en produit absorbant les liquides. Par exemple, le brevet EP-A-0 169 946 décrit un procédé selon lequel la boue de départ, contenant 20 à 50 % en poids de fibres (sur la base de la matière sèche, le reste étant des pigments non organiques) et a une teneur en eau comprise en 40 et 70 % en poids et, de préférence 65 à 55 %, est mélangée à un surfactif pour augmenter la capacité d'absorption et convoyée au moyen d'un convoyeur à vis dans lequel elle est transformée en granulés, vers un appareil de séchage à air chaud dans lequel sa teneur en humidité est ramenée à une valeur de 1 à 10 % en poids.

Or, on sait aussi que les convoyeurs à vis n'ont plus un fonctionnement vraiment satisfaisant quand la matière traitée ne contient pas au moins 35 à 45 % de fibres. Par ailleurs, il est évident que l'on doit s'efforcer de perdre le moins de fibres possible et que les bornes de papeterie ont tendance à être de moins en moins riches en fibres, principalement en fibres longues qui conviennent mieux aux convoyeurs à vis.

L'invention a pour but principal d'apporter un procédé de traitement des bornes de papeterie conçu et mis au point pour être notablement, sinon totalement indépendant, pour son bon fonctionnement de la teneur de ces bornes en fibres et principalement en fibres longues.

L'invention concerne un procédé pour la préparation, par fragmentation de bornes de papeterie ayant déjà subi une déshydratation partielle, de granulés dont la taille est pour la majeure partie d'entre eux de l'ordre de grandeur de quelques millimètres et qui sont destinés à servir de produits absorbants, en particulier, litière pour chats, le procédé comportant un séchage à l'air chaud jusqu'à ce que le contenu en eau du produit ne dépasse pas 10 % en poids et le tamisage final des granulés, caractérisé par une opération, préalable à la formation des granulés, d'émiettement desdites bornes déshydratées et ayant une teneur en eau ne dépassant pas 50 % en poids, et par le fait que le séchage du produit émietté est, afin de constituer des granulés ayant sensiblement la taille des granulés finaux désirés, effectué à l'intérieur d'un four par circulation du produit émietté avec un courant d'air chaud.

Grâce à l'émiettement préalable au séchage et à la circulation du produit dans l'air chaud, dans un four du type à colonne verticale ou à tambour tournant horizontal, le produit se présente en boulettes qui ont l'avantage de ne pas s'accrocher au poil des chats. En outre, l'émiettement facilite le séchage et permet d'obtenir la taille de particules requise pour la majeure partie du produit, ce qui réduit également l'énergie nécessaire au broyage.

Selon un premier mode d'exécution, l'émiettement est obtenu au moyen d'un malaxeur-déchiqueteur où l'on ajoute au produit à émietter un produit absorbant qui est avantageusement constitué par celles des particules dont les tailles s'écartent de celles des granulés finaux désirés, afin de ramener la teneur en humidité, à l'intérieur du malaxeur-déchiqueteur, à une valeur maximale de l'ordre de 35 % en poids, ce qui est indispensable à l'émiettement au moyen de cet appareil.

Selon un second mode d'exécution, l'émiettement est effectué sur un tapis de chargement disposé de façon à former un angle d'au moins 50° avec le plan horizontal.

Dans ce second mode d'exécution, le procédé fournit un émiettement particulièrement efficace, les particules circulant sur le tapis incliné et la chaux, outre son rôle bactéricide et déshydratant, facilitant la formation de flocons qui se transforment en particules cylindriques, en descendant sur le tapis par gravité et en roulant sur elles-mêmes.

Il est ainsi possible de s'abstenir d'ajouter un produit absorbant comme prévu dans le premier mode d'exécution. Par ailleurs, une partie notable du produit qui sort du four a directement la taille de particules désirée et, après passage sur un tamiseur-séparateur, n'a plus besoin de subir de broyage.

Suivant une particularité supplémentaire, le refus du tamiseur-séparateur (grosses boulettes) est envoyé dans un déchiqueteur à pales pour être recyclé à l'entrée du four de séchage ou du cyclone qui lui fait suite.

D'autres particularités, ainsi que les avantages de l'invention, apparaîtront clairement à la lumière de la description ci-après.

Au dessin annexé :

La figure 1 représente schématiquement une installation conforme au premier mode d'exécution, tandis que

La figure 2 représente une installation conforme au second mode d'exécution.

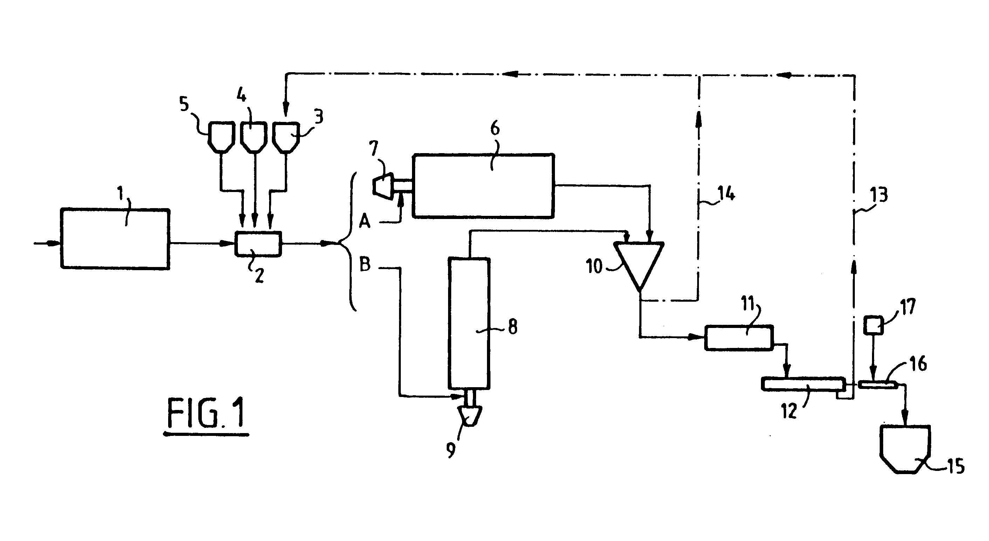

A la figure 1, les bornes de papeterie subissent une déshydratation partielle dans un filtre à bande presseuse 1 pour sortir de ce dernier avec une siccité de 50 % ; la matière sèche contient 40 % de fibres de longueur moyenne et 60 % de charges diverses. Ce produit de départ contient généralement un agent mouillant (surfactif) et parfois un agent masquant : il est connu de se servir de ces agents dans la fabrication du papier.

Après le filtre à bande presseuse 1, le produit déshydraté contenant 50 % d'eau est envoyé dans un malaxeur-déchiqueteur 2 où l'on introduit en même temps un produit absorbant ; au début de la mise en marche, ce dernier est de la sciure de bois provenant d'une trémie 3. Pendant le fonctionnement, la trémie 3 est alimentée par du produit séché recyclé comme indiqué par un trait mixte.

Dans l'exemple décrit ici, les boues de papeterie ne contenaient que très peu d'agent masquant et d'agent mouillant. Il existe donc dans l'installation deux trémies supplémentaires 4, 5 au-dessus du malaxeur-déchiqueteur 2. A partir de la trémie 4, on envoie dans ce dernier 500 g d'agent masquant (par exemple celui qui est vendu par la Société allemande BASF sous la dénomination "Protectol GDA") et, à partir de la trémie 5, 500 g d'agent mouillant (vendu par la même Société sous la dénomination "Lutensol AP6") par tonne du produit final.

Le produit absorbant est ajouté dans le malaxeur-déchiqueteur 2 en quantité voulue pour que, à l'intérieur de ce dernier, la teneur en humidité du produit de départ descende jusqu'à 35 % environ. De ce fait, le produit se fragmente en particules distinctes analogues à de petites boulettes dont la plus grande partie a une taille de plusieurs millimètres.

D'une façon plus générale, le produit absorbant, pour des boues ayant une teneur en matière sèche comprise entre 30 et 60 % en poids, sera utilisé dans une proportion qui peut être de 5 à 20 % en poids du poids des boues traitées ; ce produit absorbant sera choisi parmi les corps connus ayant une capacité certaine d'absorption des liquides, tels que les suivants : sciure de bois, kaolin, poussière de produits minéraux absorbants, vermiculite, ... La quantité ajoutée est d'autant plus faible que le produit est plus absorbant et que les boues de départ contiennent plus de fibres. Quand la quantité de fibres n'atteint pas 30 % en poids de matière sèche, on ajoute 10 % environ de vermiculite, en poids des boues traitées, en plus du produit absorbant mentionné en premier.

Avantageusement, comme on l'a indiqué dans le mode d'exécution décrit, on emploie comme produit absorbant ajouté une fraction du produit en cours de traitement que l'on recycle après une opération de séchage, ce qui rend le procédé particulièrement économique.

A la sortie du malaxeur-déchiqueteur 2, la matière en particules est envoyée, soit par une voie A dans un four de séchage à tambour tournant horizontal 6 équipé d'un brûleur 7, soit par une voie B dans une colonne verticale de séchage 8 équipée d'un brûleur 9. Les particules circulent avec les gaz de combustion et sont séchées jusqu'à une humidité résiduelle de 10 % ou moins.

La température des gaz chauds peut être comprise entre 80°C et 500°C ; on utilise avantageusement les fumées des générateurs thermiques de la papeterie, qui sont généralement rejetées à une température de 100°C à 200°C environ.

L'ensemble du gaz et des particules séchées est envoyé dans un cyclone de séparation 10 après lequel le produit séparé des gaz chauds est envoyé dans un broyeur 11, par exemple un broyeur à galets, qui est suivi d'un tamis 12. Ce dernier est équipé de toiles à tamis de calibre 6 et 20, respectivement à ouvertures de passage de 3,36 mm et de 0,841 mm.

Les particules qui arrivent au broyeur 11 ont déjà des dimensions peu différentes de la gamme des dimensions souhaitées, de sorte que le broyage exige peu d'énergie. Les particules refusées et les fines traversantes sont renvoyées de la sortie du tamis 12 à la trémie 3, comme indiqué par un trait mixte 13, pour être recyclées en jouant le rôle d'agent absorbant avec la fraction du produit séché non broyé qui est prélevée à la sortie du cyclone de séparation 10, comme indiqué par un trait mixte 14. Cette fraction du produit séché ayant une siccité de 90 % représente, en fonctionnement établi, 20 % environ en poids de la quantité qui sort du cyclone de séparation 10.

Après le tamis 12, les particules qui ont les dimensions désirées sont envoyées à une trémie 15 ou sont ensachées aussitôt pour expédition. Le déplacement entre le tamis 12 et la trémie 15 se fait à l'aide d'un transporteur à bande 16 au-dessus duquel est installé un distributeur 17 de produit agréablement odorant, par exemple le produit à odeur de lavande vendu sous la référence "RO 259" par la Société française Reynaud ; ce produit odorant est distribué, par exemple, à raison de 300 g par tonne de produit final.

Le produit absorbant obtenu comme on vient de le décrire absorbe environ 98 g d'eau par 100 g de produit et convient très bien comme litière pour animaux domestiques, notamment pour les chats, du fait de sa propriété absorbante, de son apparence analogue à celle de granules et de l'absence de mauvaise odeur.

D'une façon plus générale, le produit final a une densité apparente en vrac de 0,400 environ, avec une siccité de 90 à 95 %. Son pouvoir absorbant vis-à-vis des liquides est compris entre 95 et 100 g de liquide pour 100 g de produit.

Il est entendu que les corps cités dans ce qui précède l'ont été à titre indicatif seulement et qu'ils peuvent être remplacés par des corps à propriétés analogues.

Les dimensions des particules, dans la fraction du produit qui est retenue au cours du tamisage, sont choisies en fonction de l'usage envisagé. Quand il s'agit d'employer le produit final pour en faire des litières pour animaux domestiques, principalement pour chats, il est préférable de retenir les particules de la gamme comprise entre 0,80 mm environ et 3,50 mm environ. Des gammes différentes entre les valeurs de 0,20 mm et 6,5 mm conviennent à des utilisations différentes (absorption de liquide répandu, charge légère pour des matières diverses, etc...).

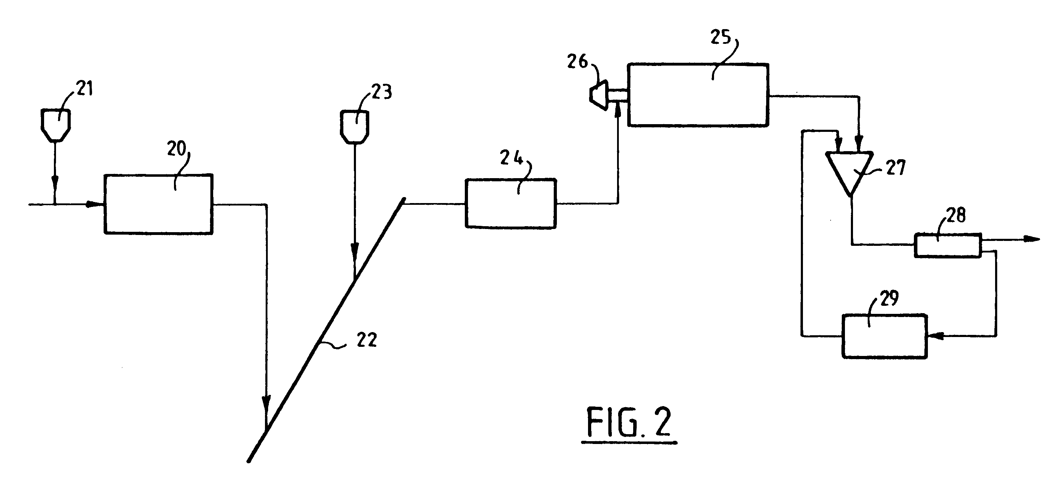

A la figure 2, on a représenté en 20 un appareil de déshydratation, par exemple du type commercialisé par la Société Neyrtec sous le nom de "Tasster", à l'entrée duquel les boues de papeterie ont une teneur en matière sèche de 5 à 6 % en poids et contiennent environ 1 % en poids d'un bactéricide (provenant d'un distributeur 21).

A la sortie de l'appareil 20, la boue, dont la teneur en matière sèche est par exemple comprise entre 50 et 55 % en poids, est déversée au bas d'un tapis de chargement 22 incliné par rapport au plan horizontal. De la chaux (environ 1 % en poids) est déversée à la partie supérieure du tapis (trémie 23).

Le tapis, à barres transversales, est par exemple d'un type couramment utilisé en agriculture pour effectuer des chargements, mais avec une inclinaison plus grande (au moins 50° et, de préférence, 60°).

Les flocons qui se forment en haut du tapis redescendent par gravité et forment, au moins partiellement, des particules cylindriques de la grosseur d'un crayon et de quelques cm de long. Il reste cependant quelques blocs, qui sont émiettés dans un émietteur à peignes 24. Comme dans le premier mode d'exécution, les particules sont ensuite séchées par exemple dans un four à tambour tournant horizontal 25 équipé d'un brûleur 26.

En circulant dans le four avec les gaz de combustion, elles sont séchées jusqu'à une teneur en matière sèche de 90 à 95 % en poids, et forment des boulettes dont une partie importante a déjà la taille finale requise. Après passage dans un cyclone 27, ces boulettes passent sur un tamiseur-séparateur 28, à la sortie duquel la partie ayant la taille convenable va directement vers la trémie de conditionnement, de préférence après avoir subi une pulvérisation d'agents mouillants en surface.

Le refus du tamiseur-séparateur, constitué de boulettes plus grosses et ayant une teneur en humidité qui peut atteindre 30 % en poids, est envoyé dans un déchiqueteur à pales 29, à la sortie duquel il est recyclé à l'entrée du cyclone 27 ou du four 25.

Le déchiqueteur 29 peut avantageusement coopérer avec un petit cyclone (non figuré), à la sortie duquel sont recueillies les poussières, qui seront alors recyclées à l'entrée de l'installation.

**Revendications**

1. Procédé pour la préparation, par fragmentation de bornes de papeterie ayant déjà subi une déshydratation partielle, de granulés dont la taille est pour la majeure partie d'entre eux de l'ordre de grandeur de quelques millimètres et qui sont destinés à servir de produits absorbants, en particulier, litière pour chats, le procédé comportant un séchage à l'air chaud jusqu'à ce que le contenu en eau du produit ne dépasse pas 10 % en poids et le tamisage final des granulés, caractérisé par une opération, préalable à la formation des granulés, d'émiettement desdites bornes déshydratées et ayant une teneur en eau ne dépassant pas 50 % en poids, et par le fait que le séchage du produit émietté est, afin de constituer des granulés ayant sensiblement la taille des granulés finaux désirés, effectué à l'intérieur d'un four par circulation du produit émietté avec un courant d'air chaud.

2. Procédé selon la revendication 1, caractérisé en ce que l'opération de séchage et de constitution de granulés est effectuée dans un four à tambour tournant horizontal (6).

3. Procédé selon la revendication 1, caractérisé en ce que l'opération de séchage et de constitution de granulés est effectuée dans un four à colonne verticale (8) équipé d'un brûleur (9).

**4.** Procédé selon la revendication 1,
caractérisé en ce que l'émiettement est obtenu au moyen d'un malaxeur-déchiqueteur (2) où l'on ajoute au produit à émietter un produit absorbant (3) qui est avantageusement constitué par celles des particules dont les tailles s'écartent de celles des granulés finaux désirés, afin de ramener la teneur en humidité, à l'intérieur du malaxeur-déchiqueteur, à une valeur maximale de l'ordre de 35 % en poids, ce qui est indispensable à l'émiettement au moyen de cet appareil.

## Claims

**1.** A method for preparing, by fragmentation of paper making sludges already having undergone partial dehydration, pellets the major part of which has a size of the order of a few millimeters for serving as absorbing products, in particuler for litter for cats, said method including hot air drying until the water content of the product does not exceed 10% by weight and the final sifting of the pellets,
characterized by an operation, previous to the formation of the pellets, of crumbing said dehydrated sludges whose water content does not exceed 50% by weight, and by the fact that drying of the crumbed product is carried out in an oven by circulation of the crumbed product with hot air, so as to form pellets having substantially the size of the final pellets desired.

**2.** The method as claimed in claim 1,
characterized in that the drying and pellet-forming operation is carried out in a horizontal rotary drum oven (6).

**3.** The method as claimed in claim 1,
characterized in that the drying and pellet-forming operation is carried out in an oven provided with a vertical column (8) equipped with a burner (9).

**4.** The method as claimed in claim 1,
characterized in that the formation of crumbs is obtained by means of a mixer-chipper (2) where an absorbant product (3), advantageously formed by those of the particles whose sizes do not come within the final desired range, is added to the product to be fragmented, so as to bring the humidity content, inside the mixer-chipper to a maximum value of the order of 35% by weight, which is indispensable to the formation of crumbs in this apparatus.

## Patentansprüche

**1.** Verfahren zur Herstellung, durch Zerkleinerung von schon teilweise entwässertem Schlamm aus der Papierherstellung, von Granulat, dessen Grösse zum grossen Teil etwa einige Millimeter beträgt und das als Absorbierprodukt insbesondere als Katzenstreu, dienen soll, wobei besagtes Verfahren eine Trocknung durch Heissluft einschliesst, bis der Wassergehalt des Produktes nicht 10% des Gewichtes übersteigt und zuletzt die Siebung des Granulats, gekennzeichnet durch ein Arbeitsverfahren, vor der Erzeugung des Granulats, zur Zerbröckelung des entwässerten Schlamms, dessen Wassergehalt nicht 50% des Gewichtes übersteigt und dadurch, dass das Trocknen des zerbröckelten Produktes in einem Ofen mit Heissluftstrom durchgeführt wird, um ein Granulat zu bilden, dessen Grösse in etwa der Grösse des endgültigen gewünschten Granulats entspricht.

**2.** Verfahren nach Anspruch 1,
dadurch gekennzeichnet, dass das Trocken- und Granulatbildungsverfahren in einem Ofen mit waagerechter Drehtrommel (6) durchgeführt wird.

**3.** Verfahren nach Anspruch 1,
dadurch gekennzeichnet, dass das Trocken- und Granulatbildungsverfahren in einem Ofen mit senkrechter Säule (8), der mit einem Brenner (9) ausgestattet ist ausgeführt wird.

**4.** Verfahren nach Anspruch 1,
dadurch gekennzeichnet, dass die Zerbröckelung in einem Mischzerkleinerer (2) durchgeführt wird, wo dem zu zerbröckelnden Produkt ein Absorbierprodukt (3) hinzugefügt wird, das vorteilhafterweise aus den Partikeln besteht, deren Grösse von der Grösse des gewünschten endgültigen Granulats abweicht, um den Feuchtigkeitsgehalt im Mischzerkleinerer auf einen Höchstwert von etwa 35% des Gewichtes herabzusetzen, der zur Zerbröckelung in diesem Gerät unerlässlich ist.

FIG.1

FIG. 2